# DEMANDE DE BREVET EUROPEEN

(11) **EP 0 729 257 A1**
(43) Date de publication de la demande: **28.08.1996**
(21) Numéro de dépôt: 96400338.8
(22) Date de dépôt: 19.02.1996
(51) Int. Cl.: H04M 1/64

(54) **Procédé de stockage d'annonces dans un appareillage répondeur téléphonique ou radio-téléphonique, et appareillage d'abonné mettant en oeuvre un tel procédé**

(30) Priorité: 23.02.1995 FR 9502126
(71) Demandeur: ALCATEL BUSINESS SYSTEMS, F-75008 Paris (FR)
(72) Inventeur: Kania, Bertrand, 75011 Paris (FR)
(74) Mandataire: Schaub, Bernard

(57) **Abrégé**

Le procédé de stockage d'annonce(s) en mémoire d'un appareillage d'abonné implique:
- une première phase (21) qui est déclenchée par une première commande externe et qui se traduit par une sélection d'une zone de stockage pour une annonce de la mémoire et par une possibilité d'enregistrement de l'annonce dans une mémoire tampon,
- "n" secondes phases (22) qui sont déclenchées par "n" secondes commandes externes et qui se traduisent chacune par une sélection interne d'une nouvelle zone de stockage d'annonce en mémoire principale et par une possibilité d'enregistrement d'annonce en mémoire tampon,
- une troisième phase (23) qui est déclenchée par une troisième commande externe et qui entraîne une copie de l'annonce enregistrée en mémoire tampon dans la zone de stockage en mémoire principale qui a été sélectionnée en dernier.

L'appareillage comporte des moyens de commande permettant le déclenchement sélectif des différentes phases du procédé.

## Description

Le domaine de l'invention est celui des répondeurs téléphoniques permettant de délivrer des annonces enregistrées à des correspondants.

L'invention concerne plus particulièrement un procédé de stockage d'annonces dans un appareillage d'abonné, répondeur ou doté d'une fonction de répondeur téléphonique ou radiotéléphonique, ainsi qu'un appareillage pour la mise en oeuvre de ce procédé. Les appareillages répondeurs les plus simples sont conçus pour ne stocker qu'une annonce. La procédure de stockage d'une annonce consiste alors à appuyer sur une touche pour commencer l'enregistrement, puis à appuyer de nouveau sur cette touche, ou alternativement sur une autre touche, pour interrompre l'enregistrement. L'annonce est enregistrée directement soit sur une bande magnétique, soit dans une mémoire électronique.

Afin de permettre la délivrance aux correspondants de différentes annonces, on exige des nouveaux modèles de répondeur qu'ils permettent le stockage simultané de plusieurs annonces.

Ainsi, l'utilisateur peut remplacer une annonce que son répondeur délivre aux correspondants par une autre en choisissant celle-ci parmi les diverses annonces stockées, sans qu'il soit nécessaire d'effacer l'annonce précédemment utilisée.

Dans le cas d'un répondeur-enregistreur, le stockage de plusieurs annonces permet aussi de délivrer une annonce d'accueil, avant qu'un correspondant n'ait eu la possibilité de laisser un message, puis une annonce de remerciement, après qu'un message ait été éventuellement laissé par ce correspondant.

De façon connue, la procédure de stockage d'annonces dans de tels modèles de répondeur consiste à :
- appuyer sur une première touche, choisie parmi une pluralité de premières touches, pour indiquer dans quelle zone de stockage de bande magnétique ou de mémoire, selon la nature des moyens de stockage, l'annonce doit être stockée; la bande magnétique est alors déroulée, ou le pointeur d'écriture de la mémoire est alors déplacé, de façon adéquate ;
- appuyer sur une seconde touche pour commencer l'enregistrement ;
- appuyer de nouveau soit sur la première touche, soit sur une troisième touche pour interrompre l'enregistrement.

Les dispositifs connus de stockage d'annonces présentent l'inconvénient de nécessiter un nombre élevé de touches. En effet, ces dispositifs connus comprennent autant de premières touches qu'il existe de zones destinées à recevoir une annonce, puisque l'utilisateur doit indiquer dans quelle zone doit être stockée l'annonce, avant que l'enregistrement proprement dit ne commence.

Les dispositifs connus de stockage d'annonces comprennent donc soit un nombre élevé de premières touches, ce qui les rend encombrants et peu conviviaux, soit un nombre restreint de premières touches, ce qui n'est possible qu'en limitant le nombre d'annonces qu'ils peuvent stocker, puisque dans ce cas le nombre de premières touches est égal au nombre de zones de stockage.

L'un des objectifs de la présente invention est donc d'offrir un procédé de stockage d'annonces dans un répondeur dont la mise en oeuvre soit simple et ne nécessite qu'un nombre restreint de touches, tout en permettant le stockage d'un nombre élevé d'annonces distinctes.

L'invention propose donc un procédé de stockage d'annonces dans une mémoire, dite principale, d'appareillage d'abonné répondeur ou doté d'une fonction de répondeur téléphonique ou radio-téléphonique, ladite mémoire comprenant des zones dans chacune desquelles une annonce peut être stockée.

Selon une première caractéristique du procédé selon l'invention, le stockage d'annonce(s) comporte successivement:
- une première phase qui est déclenchée par une première commande externe et qui se traduit par une sélection interne d'une zone de stockage pour une annonce en mémoire principale, et par l'offre d'une possibilité d'enregistrement, au moins partiel, d'une annonce à stocker dans une mémoire tampon ou zone de mémoire tampon,
- "n" secondes phases qui sont déclenchées par "n" secondes commandes externes et qui se traduisent chacune par une sélection interne d'une nouvelle zone de stockage pour une annonce en mémoire principale et par l'offre d'une possibilité d'enregistrement, au moins partiel, d'une annonce dans la mémoire tampon ou zone de mémoire tampon, "n" étant un nombre entier variant entre zéro et un nombre maximal "N" déterminé;
- une troisième phase qui est déclenchée par une troisième commande externe et qui entraîne une copie de l'annonce enregistrée en mémoire tampon dans la zone de stockage en mémoire principale qui a été sélectionnée en dernier.

Selon une seconde caractéristique du procédé selon l'invention, la sélection d'une zone de stockage d'annonce en mémoire principale, parmi les "N" zones de cette mémoire qui permettent un tel stockage, s'effectue selon un ordre interne déterminé et en succession directe après une première commande externe et en fonction du nombre de secondes commandes lancées à sa suite.

L'invention propose aussi un appareillage d'abonné, répondeur, ou doté d'une fonction de répondeur, téléphonique ou radio-téléphonique, comportant au moins un microprocesseur de gestion, une mémoire, des moyens de génération d'annonces et des moyens de commande pour la mise en oeuvre du procédé évoqué ci-dessus.

Selon une caractéristique de l'invention cet appareillage comporte des zones de mémoire principale susceptibles d'être affectées au moins temporairement chacune au stockage d'une annonce, une mémoire tampon, ou zone de mémoire exploitée en tampon, qui permet l'enregistrement temporaire d'une annonce à stocker et des moyens de commande permettant le déclenchement sélectif des différentes phases de mise en oeuvre définies pour le procédé selon l'invention.

Selon une autre caractéristique de l'invention, l'appareillage comporte des moyens de commande pour le déclenchement sélectif d'une première ou d'une troisième phase par l'intermédiaire d'une première touche et pour celui d'une seconde phase par l'intermédiaire d'une seconde touche.

Selon une autre caractéristique de l'invention, l'appareillage comporte des moyens logiciels et/ou matériels permettant de distinguer le déclenchement d'une première phase de celui d'une troisième phase par prise en compte de chaque durée d'appui de première touche, cette durée étant prévue différente pour ces deux phases.

Selon une autre caractéristique de l'invention, l'appareillage comporte des moyens logiciels et/ou matériels permettant de distinguer le déclenchement d'une première phase de celui d'une troisième phase par prise en compte de chaque durée d'appui de première touche, ces moyens lançant une première phase à partir du moment où un appui de première touche ayant une durée au moins égale à une durée de référence déterminée est détecté, et une troisième phase pour une durée d'appui de première touche inférieure à ladite durée de référence après déclenchement d'une première et éventuellement d'une seconde phase, ou de plusieurs secondes phases, en succession.

Selon une caractéristique d'une variante d'appareillage selon l'invention, ce dernier comporte des moyens de commande pour le déclenchement sélectif des différentes phases par l'intermédiaire d'une même touche et des moyens logiciels et/ou matériels permettant de distinguer le déclenchement des différentes phases par prise en compte de chaque durée d'appui de ladite même touche et de l'ordre de succession des appuis successifs au cours du stockage d'une annonce, les déclenchements d'une première phase et d'une troisième phase étant respectivement commandés l'un à détection d'un premier appui et l'autre à détection d'un appui ultérieur ayant chacun une durée au moins égale à une durée de référence déterminée; le déclenchement d'une seconde phase étant commandé à détection de chaque appui de touche dont la durée est inférieure à la durée de référence après un premier appui ayant entraîné le déclenchement d'une première phase et tant que cet appui n'a pas été suivi d'un appui dont la durée est au moins égale à la durée de référence. D'autres caractéristiques de l'invention apparaîtront à la lecture de la description suivante d'un mode de réalisation de l'invention, donné à titre d'exemple indicatif et non limitatif, et des dessins annexés, dans lesquels :
- la figure 1 présente un schéma synoptique d'un exemple d'appareillage répondeur d'abonné téléphonique permettant la mise en oeuvre du procédé de stockage d'annonces selon l'invention;
- la figure 2 présente un organigramme relatif au procédé de stockage d'annonces, selon l'invention.

L'invention concerne donc un procédé de stockage d'annonces, par exemple d'annonces d'accueil et de remerciement, dans un appareillage répondeur ou doté d'une fonction de répondeur téléphonique ou éventuellement radiotéléphonique d'abonné.

Comme il est connu, il existe divers appareillages téléphoniques ou éventuellement radio-téléphoniques d'abonné susceptibles de disposer d'une fonction de répondeur. Celle-ci permet la transmission par l'appareillage d'au moins un message pré-enregistré vers un correspondant appelant, lorsqu'il n'y a pas d'intervention effectuée par un utilisateur au niveau de l'appareillage pour entrer en communication avec ce correspondant appelant, ainsi qu'éventuellement l'enregistrement d'un message d'un correspondant appelant à destination d'au moins un utilisateur de l'appareillage, au niveau de ce dernier.

Comme il est aussi connu, de ces appareillages sont par exemple respectivement obtenus par association d'un appareil répondeur et d'un appareil téléphonique simple ou multifonction interconnectés, d'autres sont constitués par un appareil téléphonique dans lequel est intégré un répondeur, d'autres encore sont constitués par un ordinateur multimédia muni de moyens permettant la communication téléphonique et le fonctionnement en répondeur. Des appareillages analogues sont susceptibles d'être destinés à fonctionner pour des communications par voie radiotéléphonique.

Quel que soit le cas l'appareillage comporte au moins:
- un microprocesseur 1;
- des moyens de génération et de restitution d'annonces comprenant un microphone 2, un haut-parleur 13 et des moyens 3 de conversion de signaux (analogique/numérique et numérique/analogique);
- une mémoire 4, ici dite principale, supervisée par le microprocesseur et comprenant des zones 5₁ à 5_{N} dans chacune desquelles peut être stockée une annonce ;
- une mémoire tampon, ou éventuellement une zone de mémoire principale exploitée en tampon, également supervisée par le processeur et ici référencée 6;
- des moyens matériels et/ou logiciels pour le déclenchement de diverses phases du procédé de stockage selon l'invention qui sont référencés 7, 8 et 9, les phases distinguées étant ici au nombre de trois.

Ces différentes phases sont déclenchées par des commandes externes produites par les utilisateurs de l'appareillage.

Dans une forme de réalisation, lors d'un stockage d'annonce(s), une première touche 10 de l'appareillage permet d'obtenir une première commande de déclenchement d'une première phase par actionnement de moyens globalement référencés 7, développés plus loin. Une seconde touche 8 de l'appareillage permet d'obtenir une seconde commande externe de déclenchement d'une éventuelle phase intermédiaire, dite seconde phase. Une troisième commande pour le déclenchement d'une troisième phase par actionnement de moyens globalement référencés 9 est également obtenu à partir de la première touche 10.

A cet effet, les deux touches 8 et 10 permettent d'agir sur le microprocesseur 1 auquel elles sont donc reliées, via des moyens d'interface, connus en eux-mêmes et non représentés.

Dans une forme de réalisation, un appui, dit long, d'un utilisateur sur la première touche 10 pendant un temps supérieur à une première durée de référence prédéterminée, est choisi pour commander le déclenchement de la première phase. Un appui, dit court, sur cette même touche, pendant un temps inférieur à la première durée de référence et supérieur à une seconde durée minimale de référence prédéterminée, est choisi pour commander le déclenchement de la troisième phase. Un appui sur la seconde touche 8 commande le déclenchement d'une seconde phase. Les touches 8, 10 peuvent éventuellement être des touches ayant par ailleurs une ou plusieurs autres fonctions, hors du cadre des opérations de stockage.

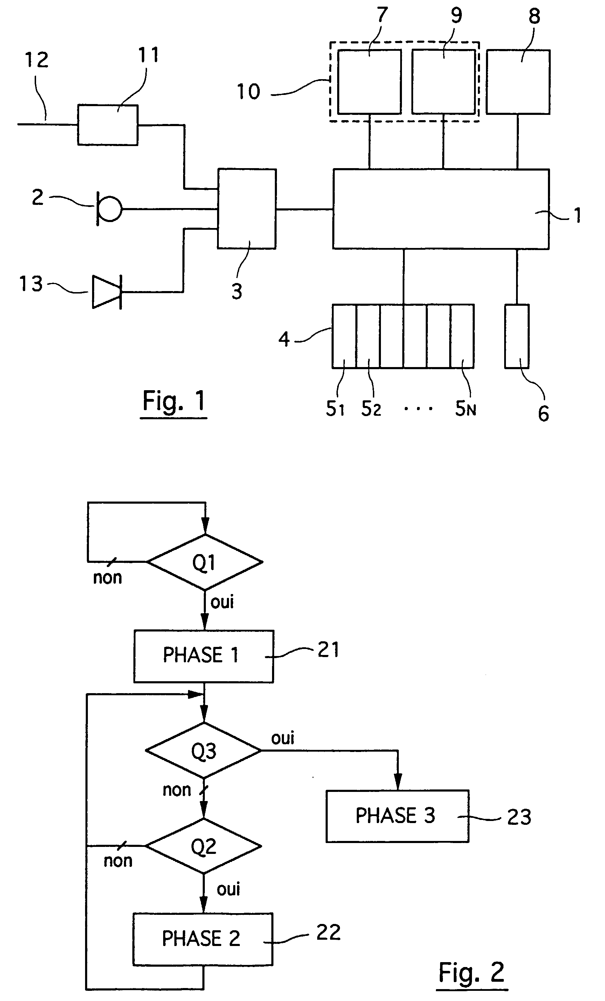

Sur la figure 1, on a également représenté certains autres éléments constitutifs d'un appareillage qui sont notamment impliqués lorsque cet appareillage fonctionne en répondeur, et notamment un module d'interface 11 permettant de connecter l'appareillage à une ligne téléphonique 12. Ce module d'interface 1 1 est relié au microprocesseur 1 par les moyens de conversion 3 de même que le microphone et le haut-parleur.

Il est à noter que le dispositif selon l'invention peut être entièrement constitué d'éléments déjà présents dans les répondeurs connus de l'état de la technique et plus particulièrement de ceux qui permettent le stockage d'annonces sur mémoire électronique.

Comme indiqué plus haut, le procédé de stockage d'annonces envisagé qui est succinctement symbolisé sur la figure 2, présente trois phases susceptibles d'être successivement déclenchées en cas de stockage d'annonce(s).

Une première phase 21, déclenchée par une première commande externe telle qu'évoquée plus haut, se traduit par une opération de sélection interne dans l'appareillage d'une première des zones de mémoire principale permettant le stockage d'une annonce, par exemple par le microprocesseur dûment programmé. Simultanément une opération d'enregistrement temporaire en mémoire tampon 6 est initiée, par exemple sous le contrôle du microprocesseur, pour permettre à l'utilisateur d'introduire dans l'appareillage une annonce qu'il veut stocker en vue de son utilisation ultérieure, selon un procédé d'exploitation qui ne sera pas évoqué ici dans la mesure où il n'a qu'un rapport indirect avec l'objet de la présente invention.

Cette première phase est destinée à permettre l'enregistrement d'une annonce dans une première zone de stockage d'annonce en mémoire principale, elle est susceptible d'être interrompue, si un utilisateur désireux d'effectuer un stockage d'annonce, souhaite enregistrer une annonce dans une zone de stockage différente de la première zone, en particulier si celle-ci contient déjà une annonce que cet utilisateur souhaite conserver.

En ce cas, un tel utilisateur déclenche une seconde phase 22, différente de la première commande, par une seconde commande externe, qui est lancée par un appui sur la touche 8 dans l'exemple choisi plus haut. Cette seconde phase se traduit par une opération de sélection interne d'une nouvelle zone de mémoire principale qui permet le stockage d'une annonce. Simultanément une nouvelle opération d'enregistrement temporaire en mémoire tampon est initiée pour permettre à l'utilisateur d'introduire dans l'appareillage la nouvelle annonce à stocker en vue de son utilisation ultérieure.

Cette seconde phase destinée à permettre l'enregistrement d'une annonce dans une zone de stockage de la mémoire principale qui est autre que la première zone. Elle est susceptible d'être interrompue, notamment pour les mêmes raisons que la première phase, et elle peut utilement être déclenchée "n" fois en succession pour permettre de stocker "n+1" annonces, "n" étant un nombre entier susceptible de varier entre zéro et usuellement un nombre "N" fixé.

L'interruption d'une seconde phase est susceptible d'être déclenché par une nouvelle seconde commande externe, supposée produite par un nouvel appui sur la touche 8 dans l'exemple envisagé, cet appui entraînant le déclenchement d'une nouvelle seconde phase où une nouvelle zone de stockage en mémoire principale est sélectionnée et où une nouvelle possibilité d'enregistrement d'une annonce en mémoire tampon est offerte. L'interruption d'une seconde phase est alternativement susceptible d'être déclenché par un utilisateur désireux d'assurer le stockage permanent en mémoire principale, dans la zone de stockage d'annonce sélectionnée en dernier, de l'annonce qui est alors enregistrée en mémoire tampon.

Dans l'exemple de réalisation envisagé plus haut, une telle interruption de seconde phase pour stockage permanent est susceptible d'être occasionné par un appui de touche 10 dont la durée est inférieure à la première durée de référence nécessaire au déclenchement d'une première phase, tout en étant supérieure à la seconde durée minimale de référence, comme indiqué précédemment.

Un tel appui de touche 10, dont la durée est inférieure à la durée de référence nécessaire au déclenchement d'une première phase tout en étant supérieure à la seconde durée minimale de référence constitue une troisième commande externe qui déclenche une troisième phase 23, si l'appui intervient après au moins une première phase, suivie ou non de plusieurs secondes phases successivement déclenchées.

Cette troisième phase entraîne une copie de l'annonce alors enregistrée en mémoire tampon dans la zone de stockage d'annonce en mémoire principale qui a été sélectionnée en dernier, soit donc au cours de la première phase immédiatement précédente, soit au cours de la seconde phase immédiatement précédente. L'annonce est alors stockée de manière permanente.

Chaque phase 21 à 23 est lancée si les moyens de déclenchement correspondants 7 à 9 sont activés. Sur l'organigramme présenté en figure 2, ceci correspond aux trois questions suivantes :
- Q1 (pour le déclenchement de la première phase 21) : "L'utilisateur a-t-il appuyé pendant un long instant sur la première touche la ?"
- Q2 (pour le déclenchement de la seconde phase 22): "L'utilisateur a-t-il appuyé sur la seconde touche 8 ?".
- Q3 (pour le déclenchement de la troisième phase 23): "L'utilisateur a-t-il appuyé pendant un court instant sur la première touche 10 ?"

Ainsi, lorsqu'il utilise un appareillage où est mis en oeuvre le procédé de l'invention, l'utilisateur déclenche une opération de stockage par un appui long sur la touche 10.

L'enregistrement d'annonce peut commencer alors dans la mémoire tampon 6, la zone de la mémoire principale 4 sélectionnée pour le stockage est la première zone 5₁.

Si l'utilisateur ne désire pas stocker son annonce dans la première zone 5₁, il appuie sur la seconde touche 8. L'enregistrement recommence alors dans la mémoire tampon 6, et la zone de la mémoire principale 4 sélectionnée pour le stockage est par exemple la seconde zone 5₂.

L'utilisateur peut appuyer sur la seconde touche autant de fois que nécessaire jusqu'à ce que la zone prévue pour le stockage soit celle qu'il désire. Lorsque c'est le cas, que cette zone prévue soit la première 5₁ ou l'une quelconque des suivantes 5₂ à 5_{N}, il lui suffit de parler, après son dernier appui de second touche, pour que l'enregistrement de l'annonce en mémoire tampon soit assuré.

Lorsque l'utilisateur a terminé de dicter une annonce, il termine la procédure en appuyant pendant un court instant sur la première touche, de façon que son annonce stockée temporairement dans la mémoire tampon 6 soit copiée dans la zone prévue de la mémoire principale, qui est la dernière zone précédemment sélectionnée où cette annonce st stockée de manière permanente.

Dans le mode de réalisation présenté ci-dessus, il suffit de deux touches pour enregistrer N annonces, avec N pouvant être très grand. En effet, le nombre N d'annonces ne dépend que de la taille de la mémoire principale 4 et de celle de chaque zone 5₁ à 5_{N} de stockage. Il est clair que selon une variante, le dispositif de l'invention peut comprendre trois touches permettant chacune le déclenchement d'un des trois phases 21 à 23.

De même, selon une autre variante, une seule touche peut suffire, dès lors que le déclenchement de chacune des trois phases est associé à une durée d'appui distincte, par exemple courte, moyenne ou longue.

Dans une variante préférée de réalisation où une seule touche est exploitée, l'ordre de succession des appuis successifs est aussi pris en compte. Les déclenchements d'une première phase et d'une troisième phase sont respectivement commandés l'un à détection d'un premier appui et l'autre à détection d'un appui ultérieur de la touche concernée ayant chacun une durée au moins égale à une durée de référence déterminée. Le déclenchement d'une seconde phase est alors commandé à détection de chaque appui de cette même touche dont la durée est inférieure à la durée de référence après un premier appui ayant entraîné le déclenchement d'une première phase et tant que cet appui n'a pas été suivi d'un appui dont la durée est au moins égale à la durée de référence.

Par ailleurs, afin de limiter le nombre total de touches, les touches utilisées pour la lecture des annonces peuvent être les mêmes que celles utilisées pour l'enregistrement de ces annonces. Une telle lecture permet notamment à l'utilisateur de réécouter et juger la qualité de ses annonces.

La détermination des temps d'appui de touche, la conservation des valeurs de référence de durée, le déclenchement des différentes phases et la réalisation des opérations prévues au cours de ces phases implique la mise en oeuvre de moyens matériels et/ou logiciels qui sont connus en eux-mêmes de l'homme de métier et qui ne seront donc pas développés ici, dans la mesure où ils n'ont qu'un rapport indirect avec l'objet de la présente invention.

## Revendications

1. Procédé de stockage d'annonces dans une mémoire (4), dite principale, d'appareillage d'abonné répondeur ou doté d'une fonction de répondeur téléphonique ou radiotéléphonique, ladite mémoire comprenant des zones (5₁ à 5_{N}) dans chacune desquelles une annonce peut être stockée, caractérisé en ce que le stockage d'annonce(s) comporte successivement:
- une première phase (21) qui est déclenchée par une première commande externe et qui se traduit par une sélection interne d'une zone de stockage pour une annonce en mémoire principale, et par l'offre d'une possibilité d'enregistrement, au moins partiel, de l'annonce dans une mémoire tampon ou zone de mémoire tampon (6),
- "n" secondes phases (22) qui sont déclenchées par "n" secondes commandes externes et qui se traduisent chacune par une sélection interne d'une nouvelle zone de stockage pour une annonce en mémoire principale et par l'offre d'une possibilité d'enregistrement, au moins partiel, d'une annonce dans la mémoire tampon ou zone de mémoire tampon , "n" étant un nombre entier variant entre zéro et un nombre maximal "N" déterminé;
- une troisième phase (23) qui est déclenchée par une troisième commande externe et qui entraîne une copie de l'annonce enregistrée en mémoire tampon dans la zone de stockage en mémoire principale qui a été sélectionnée en dernier.

2. Procédé selon la revendication 1, caractérisé en ce que la sélection d'une zone de stockage d'annonce en mémoire principale, parmi les "N" zones de cette mémoire qui permettent un tel stockage, s'effectue selon un ordre interne déterminé et en succession directe après une première commande externe et en fonction du nombre de secondes commandes lancées à sa suite.

3. Appareillage d'abonné, répondeur, ou doté d'une fonction répondeur, téléphonique ou radio-téléphonique, comportant au moins un microprocesseur de gestion (1), une mémoire (4) ici dite principale, des moyens (2, 3) de génération d'annonces et des moyens de commande, caractérisé en ce qu'il comporte des zones (5₁ à 5_{N}) de mémoire principale susceptibles d'être affectées au moins temporairement chacune au stockage d'une annonce, une mémoire tampon (6) ou zone de mémoire exploitée en tampon qui permet l'enregistrement temporaire d'une annonce à stocker et des moyens de commande permettant le déclenchement sélectif des différentes phases de mise en oeuvre définies pour le procédé selon la revendication 1.

4. Appareillage, selon la revendication 3, caractérisé en ce qu'il comporte des moyens de commande pour le déclenchement sélectif d'une première ou d'une troisième phase par l'intermédiaire d'une première touche (10) et pour celui d'une seconde phase par l'intermédiaire d'une seconde touche (8).

5. Appareillage, selon la revendication 4, caractérisé en ce qu'il comporte des moyens logiciels et/ou matériels permettant de distinguer le déclenchement d'une première phase de celui d'une troisième phase par prise en compte de chaque durée d'appui de première touche, cette durée étant prévue différente pour ces deux phases.

6. Appareillage, selon la revendication 7, caractérisé en ce qu'il comporte des moyens logiciels et/ou matériels permettant de distinguer le déclenchement d'une première phase de celui d'une troisième phase par prise en compte de chaque durée d'appui de première touche, ces moyens lançant une première phase à partir du moment où un appui de première touche ayant une durée au moins égale à une durée de référence déterminée est détecté, et une troisième phase pour une durée d'appui de première touche inférieure à ladite durée de référence après déclenchement d'une première et éventuellement d'une seconde phase, ou de plusieurs secondes phases, en succession.

7. Appareillage, selon la revendication 3, caractérisé en ce qu'il comporte des moyens de commande pour le déclenchement sélectif des différentes phases par l'intermédiaire d'une même touche (10) et des moyens logiciels et/ou matériels permettant de distinguer le déclenchement des différentes phases par prise en compte de chaque durée d'appui de ladite même touche et de l'ordre de succession des appuis successifs au cours du stockage d'une annonce, les déclenchements d'une première phase et d'une troisième phase étant respectivement commandés l'un à détection d'un premier appui et l'autre à détection d'un appui ultérieur ayant chacun une durée au moins égale à une durée de référence déterminée, le déclenchement d'une seconde phase étant commandé à détection de chaque appui de touche dont la durée est inférieure à la durée de référence après un premier appui ayant entraîné le déclenchement d'une première phase et tant que cet appui n'a pas été suivi d'un appui dont la durée est au moins égale à la durée de référence.
